(19) Europäisches Patentamt
European Patent Office
Office européen des brevets

(11) Veröffentlichungsnummer: **0 443 432 B1**

# (12) EUROPÄISCHE PATENTSCHRIFT

(45) Veröffentlichungstag der Patentschrift: **11.01.95**

(51) Int. Cl.[6]: **C08L 75/06**

(21) Anmeldenummer: **91102056.8**

(22) Anmeldetag: **14.02.91**

(54) **Thermoplastische Formmassen mit einer verbesserten Anfangsfestigkeit und Kältezähigkeit auf der Grundlage einer thermoplastischen Polyurethan-Copolymerisat-Mischung, Verfahren zu ihrer Herstellung und ihre Verwendung.**

(30) Priorität: **23.02.90 DE 4005818**

(43) Veröffentlichungstag der Anmeldung:
**28.08.91 Patentblatt 91/35**

(45) Bekanntmachung des Hinweises auf die Patenterteilung:
**11.01.95 Patentblatt 95/02**

(84) Benannte Vertragsstaaten:
**AT BE CH DE ES FR GB IT LI**

(56) Entgegenhaltungen:
**EP-A- 0 012 416**
**EP-A- 0 384 233**
**FR-A- 2 250 804**

**ANGEWANDTE MAKROMOLEKULARE CHEMIE, Bd. 168, April 1989, BASEL,CHSeiten 145 - 155; HSIEH ET AL.: 'Effect of Charge Groups in Polyurethane andPolystyrene Interpenetrating Networks'**

(73) Patentinhaber: **BASF Aktiengesellschaft**
**Carl-Bosch-Strasse 38**
**D-67063 Ludwigshafen (DE)**

(72) Erfinder: **Lausberg, Dietrich, Dr.**
**Nachtigalstrasse 32a**
**W-6700 Ludwigshafen (DE)**
Erfinder: **Muehlbach, Klaus, Dr.**
**Dr.-Heinrich-Winter-Strasse 19**
**W-6148 Heppenheim (DE)**
Erfinder: **Blumenstein, Uwe. Dr.**
**Ganderhofstrasse 2**
**W-6700 Ludwigshafen (DE)**
Erfinder: **Faehndrich, Knud**
**Lohneufer 14**
**W-2840 Diepholz (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft thermoplastische Formmassen mit einer verbesserten Anfangsfestigkeit und Kälteschlagzähigkeit aus

(A) mindestens einem thermoplastischen Polyurethan, im folgenden abgekürzt TPU genannt,

(B) einem kautschukelastischen Pfropfcopolymerisat, aufgebaut aus ausgewählten Monomeren,

(C) einem α-Methylstyrol, Acrylnitril und/oder Methacrylnitril-Copolymerisat,

(D) einem Copolymeren aus Styrol und einem olefinisch ungesättigten Monomeren mit mindestens einer Carboxyl-, Anhydrid-, tert.-Butylester-, Hydroxyl- oder Aminogruppe und gegebenenfalls

(E) einem verstärkend wirkenden Füllstoff.

Formmassen aus Polyurethan (PU)-Elastomeren und Pfropfkautschuken sind bekannt. Bekannt ist ferner, daß sich die Kälteflexibilität von TPU durch Modifizierung mit einem Pfropfkautschuk verbessern läßt.

Die US-A-3 049 505 beschreibt z.B. eine Formmasse aus einem vernetzten, festen PU-Elastomeren und ABS-Kautschuken, deren Pfropfauflage aus polymerisierten Styrol-Acrylnitril-Einheiten besteht und die einen Pfropfgrad von größer als 40 aufweisen. Nach Angaben der DE-A-2 854 407 (US-A-4 317 890) bestehen thermoplastische Formmassen aus (A) 75 bis 97 Gew.-% eines TPU und (B) 25 bis 3 Gew.-% eines Pfropfpolymerisats, wobei dieses aufgebaut ist aus (Ba) 5 bis 35 Gew.-%, bezogen auf (B), eines oder mehrerer Pfropfmonomeren und (Bb) 65 bis 95 Gew.-%, bezogen auf (B), einer als Pfropfgrundlage dienenden Elastomerkomponente mit einer Einfriertemperatur kleiner als -30 °C und wobei das gesamte Pfropfpolymerisat (B) weniger als 50 Gew.-% an den Monomeren Styrol, α-Methylstyrol und Acrylnitril enthält, die Pfropfauflage bevorzugt aus Styrol und Acrylnitril im Gewichtsverhältnis von 9:1 bis 1:1 besteht und der Pfropfgrad 5 bis 35 beträgt. Die erhaltenen Formmassen zeigen bei tiefen Temperaturen eine unbefriedigende Schlagzähigkeit und sind nicht frei von Segregationserscheinungen, dem sogenannten Perlmutteffekt. Durch die Segregation wird außerdem die mechanische Festigkeit der Formmassen reduziert.

Zur Vermeidung des Perlmutteffekts werden gemäß EP-A-0 152 049 (CA-A-1 231 488) ABS-Pfropfkautschuke mit einer Pfropfauflage aus Styrol und Acrylnitril im Gewichtsverhältnis von 90:10 bis 50:50 und einem Pfropfgrad von 50 bis 70 gemischt mit einem speziell aufgebauten TPU niedriger Dichte und einer Härte nach Shore D von 55 bis 80, hergestellt aus ausgewählten Aufbaukomponenten, insbesondere aus Polytetramethylenether-glykolund einem Gemisch aus Haupt- und Cokettenverlängerungsmitteln im Molverhältnis von 97:3 bis 72:28, wobei als Hauptkettenverlängerungsmittel Butandiol-1,4 oder Hexandiol-1,6 und als Cokettenverlängerungsmittel vorzugsweise Hexandiol-1,6, Butandiol-1,4, Diethylenglykol, Di- und Tripropylenglykol oder Hydrochinon-di-(β-hydroxyethylether) in Betracht kommen.

Bekannt sind ferner Mischungen aus TPU und einem thermoplastischen Polymer, ausgewählt aus der Gruppe der thermoplastischen Polycarbonate, Polyoxymethylene, Acrylnitril-Butadien-Styrol-Pfropfpolymeren, Alkylenterephthalate oder Mischungen dieser thermoplastischen Polymeren, die nach Angaben der US-A-4 179 479 Polyacrylate mit Molekulargewichten von 500.000 bis 1.500.000 als Verarbeitungshilfsmittel enthalten. Als geeignete Polyacrylate beispielhaft genannt werden Polymethylmethacrylate und Poly-n-butylmethacrylate, Copolymere, hergestellt aus Methylmethacrylat und Ethylacrylat und Terpolymere, hergestellt aus Methylmethacrylat, n-Butylacrylat und Styrol.

Die Referatekopie J 57036141 zu JP-A-111399 (vom 26.02.82) beschreibt thermoplastische Formmassen aus TPU und einem ternären Copolymeren aus Styrol, Acrylnitril und monoolefinisch ungesättigten Monomeren, wie z.B. (Meth)acrylsäure, Maleinsäure, Itaconsäure, Fumarsäure, Maleinsäureanhydrid und insbesondere Methylmethacrylat.

Aber auch durch diese Zusätze konnte die Kälteschlagzähigkeit der oben beschriebenen Formmassen, insbesondere bei Temperaturen von -20 °C und tiefer, nicht entscheidend verbessert werden. Als weiterer Nachteil ist die Unverträglichkeit der Aufbaukomponenten untereinander bei den hohen Verarbeitungstemperaturen zu nennen.

Schlagzäh modifizierte Formmassen aus mindestens einem TPU und einem ABS-Pfropfcopolymerisat auf der Grundlage von α-Methylstyrol oder einem ABS-Pfropfcopolymerisat und einem Copolymerisat auf der Grundlage von α-Methylstyrol, wie sie z.B. in den deutschen Patentanmeldungen P 39 08 237.7 oder P 39 05 008.4 beschrieben werden, ergeben Formteile mit erheblich verbesserten mechanischen Eigenschaften. Nachteilig ist jedoch die geringe Anfangsfestigkeit des Formteils unmittelbar nach seiner Herstellung. Zur Beseitigung dieses Nachteils bedarf es einer Verlängerung der Formstandzeit, die eine Erhöhung der Produktionskosten bewirkt.

Die Aufgabe der vorliegenden Erfindung bestand darin, thermoplastische Formmassen auf der Grundlage einer TPU-Copolymerisatmischung zur Verfügung zu stellen, die bei der Verarbeitung Formteile mit

einer hohen Anfangsfestigkeit (green strength) und guten mechanischen Eigenschaften, insbesondere einer hohen Kältezähigkeit, ergeben.

Diese Aufgabe konnte überraschenderweise durch den Zusatz von verhältnismäßig geringen Mengen eines bestimmten Copolymerisats aus Styrol und mindestens einem olefinisch ungesättigten Monomeren mit mindestens einer Carboxyl-, Anhydrid-, tert.-Butylester-, Hydroxyl- oder Aminogruppe zu TPU-Copolymerisatblends gelöst werden.

Gegenstand der Erfindung sind thermoplastische Formmassen auf der Grundlage einer TPU-Copolymerisatmischung, die, bezogen auf 100 Gew.-Teile, enthalten oder vorzugsweise bestehen aus

A) 20 bis 90 Gew.-Teilen, vorzugsweise 30 bis 85 Gew.-Teilen mindestens eines TPU,

B) 1 bis 40 Gew.-Teilen, vorzugsweise 5 bis 30 Gew.-Teilen mindestens eines kautschukelastischen Pfropfcopolymerisats, das aufgebaut ist aus

B1) einer Pfropfgrundlage, bestehend aus einem kautschukelastischen Polymeren mit einer Glasübergangstemperatur von unter -20 °C auf Basis Butadien oder Acrylaten mit 1 bis 10 Kohlenstoffatomen im Alkoholrest und gegebenenfalls einem Vernetzer und

B2) einer Pfropfauflage, hergestellt durch ein- oder mehrstufige Copolymerisation von Styrol, α-Methylstyrol, Acrylnitril, Methacrylnitril und Methylmethacrylat oder von Mischungen aus mindestens zwei der genannten Monomeren,

C) 5 bis 75 Gew.-Teilen, vorzugsweise 10 bis 60 Gew.-Teilen mindestens eines Copolymerisats, hergestellt durch Copolymerisation von, bezogen auf das Gesamtgewicht von (C),

C1) 55 bis 90 Gew.-% α-Methylstyrol und

C2) 10 bis 45 Gew.-% Acrylnitril oder Methacrylnitril oder Mischungen davon,

D) 0,1 bis 5 Gew.-Teilen, vorzugsweise 0,2 bis 4 Gew.-Teilen mindestens eines Copolymerisats, hergestellt durch Copolymerisation von, bezogen auf das Gesamtgewicht von (D),

D1) 60 bis 99 Gew.-% Styrol und

D2) 1 bis 40 Gew.-% mindestens eines olefinisch ungesättigten Monomeren, das mindestens eine Carboxyl-, Anhydrid-, tert.-Butylester-, Hydroxyl- oder Aminogruppe gebunden enthält, wobei bis zu 90 Gew.-%, bezogen auf das Gewicht von (D2), dieser olefinisch ungesättigten Monomeren (D2) durch Acrylnitril substituiert sein können,

und

E) 0 bis 60 Gew.-Teilen, vorzugsweise 2 bis 50 Gew.-Teilen mindestens eines verstärkend wirkenden Füllstoffs.

Gegenstände der Erfindung sind ferner ein Verfahren zur Herstellung der thermoplastischen Formmassen mit verbesserter Anfangsfestigkeit und Kältezähigkeit auf der Grundlage einer TPU-Copolymerisatmischung durch Zusammenschmelzen der Aufbaukomponenten (A) bis (D) sowie gegebenenfalls Einbringen der verstärkend wirkenden Füllstoffe (E) in einer üblichen Mischvorrichtung, vorzugsweise einem Extruder, bei einer Temperatur im Bereich von 190 bis 250 °C und einer Verweilzeit von 0,5 bis 10 Minuten und die Verwendung der erfindungsgemäß hergestellten thermoplastischen Formmassen auf der Grundlage von TPU-Copolymerisatmischungen zur Herstellung von Formkörpern, vorzugsweise Spritzgußformteilen.

Durch den Zusatz des Copolymerisats (D) kann die Anfangsfestigkeit der hergestellten Formkörper erheblich verbessert werden, ohne daß durch diese Maßnahme andere mechanische Eigenschaften nachteilig beeinflußt werden. Hervorzuheben ist außerdem die erhöhte Kerbschlagzähigkeit der Formteile in der Kälte und die verbesserte Verarbeitbarkeit der Formmassen, insbesondere nach der Spritzgußtechnik, wobei weder in der Schmelze noch im Formteil eine Entmischung der Aufbaukomponenten eintrat. Die hergestellten Formteile besaßen eine hervorragende Oberflächenbeschaffenheit.

A) Als Aufbaukomponente (A) enthalten die erfindungsgemäßen thermoplastischen Formmassen, wie bereits ausgeführt wurde, 20 bis 90 Gew.-Teile, vorzugsweise 30 bis 85 Gew.-Teile und insbesondere 45 bis 75 Gew.-Teile, bezogen auf 100 Gew.-Teile der Formmasse, eines oder mehrerer, vorzugsweise eines TPU (A).

Die erfindungsgemäß verwendbaren TPU (A) entsprechen dem Stand der Technik und können hergestellt werden durch Umsetzung von

a) organischen, vorzugsweise aromatischen Diisocyanaten, insbesondere 4,4'-Diphenylmethan-diisocyanat, mit

b) Polyhydroxylverbindungen, vorzugsweise im wesentlichen linearen Polyhydroxylverbindungen mit Molekulargewichten von 500 bis 8000, insbesondere Polyalkylenglykol-polyadipaten mit 2 bis 6 C-Atomen im Alkylenrest und Molekulargewichten von 500 bis 6000 oder hydroxylgruppenhaltigem Polytetrahydrofuran mit einem Molekulargewicht von 500 bis 3500 und

c) Diolen als Kettenverlängerungsmitteln mit Molekulargewichten von 60 bis 400, insbesondere Butandiol-1,4

in Gegenwart von

d) Katalysatoren und gegebenenfalls

e) Hilfsmitteln und/oder

f) Zusatzstoffen

bei erhöhten Temperaturen.

Zu den Aufbaukomponenten (a) bis (d) und gegebenenfalls (e) und/oder (f) ist folgendes auszuführen:

a) als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat-1,6, 2-Methyl-pentamethylen-diisocyanat-1,5, 2-Ethyl-butylen-diisocyanat-1,4 oder Mischungen aus mindestens zwei der genannten aliphatischen Diisocyanate, cycloaliphatische Diisocyanate, wie Isophoron-diisocyanat, 1,4-Cyclohexan-diisocyanat, 1-Methyl-2,4- und -2,6-cyclohexan-diisocyanatsowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan-1,2, Gemische aus 4,4'-, 2,4'- und 2,2'-Diisocyanato-diphenylethan-1,2, vorteilhafterweise solche mit einem 4,4'-Diisocyanato-diphenylethan-1,2-Gehalt von mindestens 95 Gew.-% und 1,5-Naphthylen-diisocyanat. Vorzugsweise verwendet werden Diphenylmethan-diisocyanat-Isomerengemische mit einem 4,4'-Diphenylmethan-diisocyanatgehalt von größer als 96 Gew.-% und insbesondere im wesentlichen reines 4,4'-Diphenylmethan-diisocyanat.

Die organischen Diisocyanate können gegebenenfalls in untergeordneten Mengen, z.B. in Mengen bis zu 3 Mol.%, vorzugsweise bis zu 1 Mol%, bezogen auf das organische Diisocyanat, durch ein tri- oder höherfunktionelles Polyisocyanat ersetzt werden, wobei dessen Mengen jedoch so begrenzt werden muß, daß noch thermoplastisch verarbeitbare Polyurethane erhalten werden. Eine größere Menge an derartigen mehr als difunktionellen Isocyanaten wird zweckmäßigerweise durch die Mitverwendung von weniger als difunktionellen Verbindungen mit reaktiven Wasserstoffatomen, ausgeglichen, so daß eine zu weitgehende chemische Vernetzung des Polyurethans vermieden wird. Beispiele für mehr als difunktionelle Isocyanate sind Mischungen aus Diphenylmethan-diisocyanaten und Polyphenyl-polymethylen-polyisocyanaten, sog. Roh-MDI sowie flüssige, mit Isocyanurat-, Harnstoff-, Biuret-, Allophanat-, Urethan- und/oder Carbodiimidgruppen modifizierte 4,4'- und/oder 2,4'-Diphenylmethan-diisocyanate.

Als geeignete monofunktionelle Verbindungen mit einem reaktiven Wasserstoffatom, die auch als Molekulargewichtsregler verwendbar sind, seien z.B. genannt: Monoamine wie z.B. Butyl-, Dibutyl-, Octyl-, Stearyl-, N-Methylstearylamin, Pyrrolidon, Piperidin und Cyclohexylamin, und Monoalkohole wie z.B. Butanol, Amylalkohol, 1-Ethylhexanol, Octanol, Dodecanol, Cyclohexanol und Ethylenglykolmonoethylether.

b) Als höhermolekulare Polyhydroxylverbindungen (b) mit Molekulargewichten von 500 bis 8000 eignen sich vorzugsweise Polyetherole und insbesondere Polyesterole. In Betracht kommen jedoch auch andere hydroxylgruppenhaltige Polymere mit Ether- oder Estergruppen als Brückenglieder, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls das 2 bis 3, vorzugsweise 2 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind bevorzugt beispielsweise Tetrahydrofuran, 1,3-Propylenoxid, 1,2- bzw. 2,3-Butylenoxid und insbesondere bevorzugt Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure,

Adipinsäure und/oder Glutarsäure, Alkanolamine, wie z.B. Ethanolamin, N-Alkyl-alkanolamine, N-Alkyl-dialkanolamine, wie z.B. N-Methyl- und N-Ethyl-diethanolamin und vorzugsweise zweiwertige, gegebenenfalls Etherbrücken gebunden enthaltende Alkohole, wie z.B. Ethandiol, Propandiol-1,2 und -1,3, Butandiol-1,4, Diethylenglykol, Pentandiol-1,5, Hexandiol-1,6, Dipropylenglykol, 2-Methylpentandiol-1,5 und 2-Ethyl-butandiol-1,4. Die Startermoleküle können einzeln oder als Gemische eingesetzt werden.

Vorzugsweise verwendet werden Polyetherole aus 1,2-Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist. Derartige Polyetherole können erhalten werden, indem man z.B. an das Startermolekül zunächst das 1,2-Propylenoxid und daran anschließend das Ethylenoxid polymerisiert oder zunächst das gesamte 1,2-Propylenoxid im Gemisch mit einem Teil des Ethylenoxids copolymerisiert und den Rest des Ethylenoxids anschließend anpolymerisiert oder schrittweise zunächst einen Teil des Ethylenoxids, dann das gesamte 1,2-Propylenoxid und dann den Rest des Ethylenoxids an das Startermolekül anpolymerisiert.

Insbesondere geeignet sind ferner die hydroxylgruppenhaltigen Polymerisationsprodukte des Tetrahydrofurans, vorzugsweise solche mit Molekulargewichten bis 3500.

Die im wesentlichen linearen Polyetherole besitzen Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus Dicarbonsäuren mit 2 bis 12, vorzugsweise 4 bis 6 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäuremono- und/oder -diester mit 1 bis 4 Kohlenstoffatomen im Alkoholrest, Dicarbonsäureanhydride oder Dicarbonsäurechloride zu verwenden. Beispiele für mehrwertige Alkohole sind Alkandiole und Glykole mit 2 bis 10, vorzugsweise 2 bis 6 Kohlenstoffatomen, wie Ethandiol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von $\omega$-Hydroxycarbonsäuren, beispielsweise $\omega$-Hydroxycapronsäure und vorzugsweise Polymerisationsprodukte von Lactonen, beispielsweise gegebenenfalls substituierten $\omega$-Caprolactonen.

Als Polyesterole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Polycaprolactone.

Die Polyesterole besitzen Molekulargewichte von 500 bis 6000, vorzugsweise von 800 bis 3500.

c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4 und Hydroxyalkylenether des Hydrochinons, wie z.B. 1,4-Di-($\beta$-hydroxyethyl)-hydrochinon sowie Polyoxytetramethylenglykole mit Molekulargewichten von 162 bis 378.

Zur Einstellung von Härte und Schmelzindex können die Aufbaukomponenten in relativ breiten molaren Verhältnissen variiert werden, wobei die Härte und die Schmelzviskosität mit zunehmendem Gehalt an Kettenverlängerungsmittel (c) ansteigt, während der Schmelzindex abnimmt.

Zur Herstellung der TPU (A) werden die im wesentlichen difunktionellen Polyhydroxylverbindungen (b) und Diolen (c) vorteilhafterweise in Molverhältnissen von 1:3 bis 1:12, vorzugsweise von 1:6 bis 1:12 verwendet, so daß die resultierenden TPU's eine Härte nach Shore D von 40 bis 80, vorzugsweise von 40 bis 75 besitzen.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin,

Dimethylcyclohexylamin, N-Methylmorpholin, N,N'-Dimethylpiperazin, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Gew.-Teilen pro 100 Gew.-Teilen der Mischung aus Polyhydroxylverbindungen (b) und Diolen (c) eingesetzt.

Neben Katalysatoren können den Aufbaukomponenten auch Hilfsmittel (e) und/oder Zusatzstoffe (f) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe und Verstärkungsmittel.

Die Hilfsmittel (e) und/oder Zusatzstoffe (f) können hierzu in die Aufbaukomponenten oder in die Reaktionsmischung zur Herstellung der TPU (A) eingebracht werden. Nach einer anderen Verfahrensvariante können die Hilfsmittel (e) und/oder Zusatzstoffe (f) mit mindestens einer der Aufbaukomponenten (A) bis (D) zur Herstellung der erfindungsgemäßen Formmasse gemischt und anschließend verschmolzen werden oder sie werden direkt der Schmelze aus den Komponenten (A) bis (D) einverleibt. Die zuletzt genannte Methode findet insbesondere Anwendung zum Einbringen der verstärkend wirkenden Füllstoffen (E).

Sofern zu den verwendbaren Hilfsmitteln oder Zusatzstoffen nachfolgend keine näheren Angaben gemacht werden, können diese der Fachliteratur, beispielsweise der Monographie von J.H. Saunders und K.C. Frisch "High Polymers", Band XVI, Polyurethane, Teil 1 und 2 (Verlag Interscience Publishers 1962 bzw. 1964), dem Kunststoff-Handbuch, Band 7, Polyurethane 1. und 2. Auflage (Carl Hanser Verlag, 1966 bzw. 1983) oder der DE-OS 29 01 774 entnommen werden.

Zur Herstellung der TPU werden die Aufbaukomponenten (a), (b) und (c) in Gegenwart von Katalysatoren (d) und gegebenenfalls Hilfsmitteln (e) und/oder Zusatzstoffen (f) in solchen Mengen zur Reaktion gebracht, daß das Äquivalenzverhältnis von NCO-Gruppen der Diisocyanate zur Summe der Hydroxylgruppen der Komponenten (b) und (c) 0,80 bis 1,20:1, vorzugsweise 0,95 bis 1,05:1 und insbesondere ungefähr 1:1 beträgt.

Die erfindungsgemäß verwendbaren TPU (A), die üblicherweise 8 bis 20 Gew.-%, vorzugsweise 8 bis 16 Gew.-%, bezogen auf das Gesamtgewicht, Urethangruppen gebunden enthalten und einen Schmelzindex bei 210 °C und einem Auflagegewicht von 211,8 N (21,6 kp) von 500 bis 1, vorzugsweise 100 bis 1 aufweisen, können hergestellt werden nach dem Extruder- oder vorzugsweise Bandverfahren durch batchweises oder kontinuierliches Mischen der Aufbaukomponenten (a) bis (d) sowie gegebenenfalls (e) und/oder (f), Ausreagierenlassen der Reaktionsmischung im Extruder oder auf einem Trägerband bei Temperaturen von 60 bis 250 °C, vorzugsweise 70 bis 150 °C und anschließendes Granulieren der erhaltenen TPU (A). Gegebenenfalls kann es zweckmäßig sein das erhaltene TPU (A) vor der Weiterverarbeitung zu den erfindungsgemäßen TPU-Formmassen bei 80 bis 120 °C, vorzugsweise 100 bis 110 °C über einen Zeitraum von 1 bis 24 Stunden zu tempern.

Die TPU (A) werden, wie bereits ausgeführt wurde, bevorzugt nach dem Bandverfahren hergestellt. Hierzu werden die Aufbaukomponenten (a) bis (d) und gegebenenfalls (e) und/oder (f) bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband z.B. aus Metall, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200 °C, vorzugsweise 80 bis 180 °C. In Abhängigkeit vom Diisocyanatanteil in der Reaktionsmischung wird die Reaktion durch Kühlen oder Heizen so gesteuert, daß mindestens 90 %, vorzugsweise mindestens 98 % der Isocyanatgruppen der Diisocyanate umgesetzt werden und die Reaktionsmischung bei der gewählten Reaktionstemperatur erstarrt. Aufgrund der freien Isocyanatgruppen im erstarrten Reaktionsprodukt, die bezogen auf das Gesamtgewicht, im Bereich von 0,05 bis 1 Gew.-%, vorzugsweise von 0,1 bis 0,5 Gew.-% liegen, werden TPU (A) mit einer sehr niedrigen Schmelzviskosität bzw. einem hohen Schmelzindex erhalten.

B) Als Aufbaukomponente (B) enthalten die erfindungsgemäßen thermoplastischen Formmassen, wie bereits dargelegt wurde, 1 bis 40 Gew.-Teile, vorzugsweise 5 bis 30 Gew.-Teile und insbesondere 10 bis 25 Gew.-Teile, bezogen auf 100 Gew.-Teile der Formmasse, eines oder mehrerer, vorzugsweise eines kautschukelastischen Pfropfcopolymerisats (B), die aufgebaut sind aus

B1) einer Pfropfgrundlage, bestehend aus einem kautschukelastischen Polymeren mit einer Glastemperatur von unter -20 °C auf Basis von Butadien oder Acrylaten mit 1 bis 10 Kohlenstoffatomen im Alkoholrest und gegebenenfalls einem Vernetzer und

B2) einer Pfropfauflage, hergestellt durch ein- oder mehrstufige Copolymerisation von Styrol, α-Methylstyrol, Acrylnitril, Methacrylnitril und Methylmethacrylat oder von Mischungen aus mindestens 2 der genannten Monomeren.

Geeignete Pfropfkautschuke auf Butadienbasis weisen vorzugsweise eine Glasübergangstemperatur von unter -40 °C, insbesondere von unter -50 °C auf, die eine hohe Schlagzähigkeit auch bei tiefen Temperaturen bewirkt, und sind aufgebaut aus einer Pfropfgrundlage (B1), die vorteilhafterweise besteht aus Polybutadien, Polyisopren, aus Butadien-Styrol-Copolymerisaten und Copolymerisaten aus Styrol oder Alkylstyrol, z.B. α-Methylstyrol, und konjugierten Dienen (schlagfesten Polystyrolen) und einer Pfropfauflage (B2), die einstufig, aber auch mehrstufig mit bis zu 4 Stufen aufgebaut sein kann, aus einem oder mehreren der vorgenannten Monomeren. Pfropfkautschuke dieser Art werden beispielsweise beschrieben in der DE-A-16 94 173 (US-A-3 564 077) und der DE-A-23 48 377 (US-A-3 919 353). In Betracht kommen ferner ABS-Polymerisate, wie sie z.B. in der DE-A-20 35 390 (US-A-3 644 574), der DE-A-22 48 242 (GB-A-1 409 275) und der EP-A-22 216 beschrieben werden, wobei ABS-Polymerisate gemäß EP-A-22 216 besonders bevorzugt sind.

Geeignete Pfropfkautschuke auf Acrylatbasis sind aufgebaut aus einer Pfropfgrundlage (B1), bestehend aus einem Acrylatkautschuk mit einer Glasübergangstemperatur von unter -20 °C und einer Pfropfauflage (B2), hergestellt durch Pfropfpolymerisation mindestens eines polymerisierbaren ethylenisch ungesättigten Monomeren, dessen in Abwesenheit der Pfropfgrundlage gebildetes Homopolymerisat bzw. deren gebildete Copolymerisate eine Glasübergangstemperatur von mehr als 35 °C hätten.

Die als Pfropfgrundlage in Betracht kommenden Acrylatkautschuke (B1) sind bevorzugt Polymerisate aus Acrylsäure- bzw. Methacrylsäurealkylestern, die gegebenenfalls bis zu 40 Gew.-%, bezogen auf das Gesamtgewicht, Einheiten anderer polymerisierbarer, ethylenisch ungesättigter Monomeren gebunden enthalten können. Zu den bevorzugten polymerisierbaren Acrylsäurealkylestern gehören die mit 1 bis 10 Kohlenstoffatomen im Alkylrest, wie z.B. Methyl-, Ethyl-, Butyl-, Octyl- und 2-Ethylhexylacrylat. Geeignet sind ferner Halogenalkylacrylate, vorzugsweise Halogen-$C_1$-$C_8$-alkylacrylate, wie z.B. Chlorethylacrylat und Arylalkylacrylate, wie z.B. Benzyl- oder Phenylethylacrylat. Die genannten Acrylsäurealkylester können einzeln oder in Form von Mischungen eingesetzt werden.

Die Acrylatkautschuke können unvernetzt, vernetzt oder vorzugsweise partiell vernetzt sein.

Zur Vernetzung können die Acrylsäurealkylester mit geeigneten Monomeren, die mehr als eine copolymerisierbare Doppelbindung besitzen, copolymerisiert werden. Beispiele für solche vernetzend wirkenden Monomere sind Carbonsäureester, hergestellt aus olefinisch ungesättigten Monocarbonsäuren mit 3 bis 8 Kohlenstoffatomen und olefinisch ungesättigten einwertigen Alkoholen mit 3 bis 12 Kohlenstoffatomen oder gesättigten mindestens zweiwertigen, vorzugsweise zwei- bis vierwertigen, Alkoholen mit 2 bis 20 Kohlenstoffatomen, wie z.B. Allylmethacrylat oder Alkylenglykoldi (meth)acrylat. Verwendbar sind auch mehrfach ungesättigte heterocyclische Verbindungen, wie Trivinyl- und Triallylcyanurat oder -isocyanurat, Tris-acryloyl-s-triazine, polyfunktionelle Vinylverbindungen, wie z.B. Di- und Trivinylbenzol sowie Triallylphosphat, Dicyclodihydropentadienylacrylat oder/und Diallylphthalat.

Besonders bewährt haben sich und daher vorzugsweise verwendet werden Butandioldiacrylat, Dicyclopentadienylacrylat und Butadien.

Als Vernetzer geeignete Monomere werden z.B. in der DE-A-27 26 256 und der EP-A-50 265 beschrieben.

Die Menge der vernetzend wirkenden Monomeren beträgt vorzugsweise 0,02 bis 5 Gew.-%, insbesondere 0,05 bis 2 Gew.-%, bezogen auf das Gewicht der Pfropfgrundlage.

Bei Verwendung von cyclischen, vernetzend wirkenden Monomeren mit mindestens drei ethylenisch ungesättigten Gruppen ist es vorteilhaft, ihre Menge auf maximal 1 Gew.-% der Pfropfgrundlage zu beschränken.

Geeignete "andere" polymerisierbare ethylenisch ungesättigte Monomere, die neben den Acrylsäurealkylestern gegebenenfalls zur Herstellung der Pfropfgrundlage dienen können, sind z.B. (Meth)-acrylnitril, Styrol, α-Methylstyrol, (Meth)acrylamide und Vinyl-$C_1$-$C_6$-alkylether.

Die als Pfropfgrundlage bevorzugt verwendeten Acrylatkautschuke sind Emulsionspolymerisate, die einen Gelgehalt von 60 Gew.-% aufweisen, gemessen bei 25 °C in Dimethylformamid (M. Hoffmann, H. Krömer, R. Kuhn, Polymeranalytik I und II, Georg-Thieme-Verlag Stuttgart 1977).

Als Pfropfgrundlage kommen auch Acrylatkautschuke in Betracht, die einen Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Derartige Acrylatkautschuke werden z.B. in der EP-A-50 262 beschrieben.

Der Anteil des Polydienkerns in der Pfropfgrundlage kann 0,1 bis 50 Gew.-%, vorzugsweise 10 bis 40 Gew.-%, bezogen auf das Gewicht der Pfropfgrundlage, betragen. Pfropfgrundlage und Pfropfauflage

(Pfropfhülle) können hierbei unabhängig voneinander unvernetzt, teilvernetzt oder vernetzt sein.

Als besonders bevorzugte Pfropfgrundlagen für Pfropfkautschuke auf Polyacrylatbasis kommen somit in Betracht: Acrylsäurealkylesterhomopolymerisate und -copolymerisate ohne Dienkautschukkern und Acrylsäure-alkylesterhomopolymerisate- und -copolymerisate, die einen Dienkautschuckern gebunden enthalten.

Als Monomere zur Bildung der ein- oder mehrstufig aufgebauten Pfropfauflage (B2) finden Styrol, α-Methylstyrol, Acrylnitril, Methacrylnitril und Methylmethacrylat oder deren Mischungen, insbesondere solche aus Styrol und Acrylnitril im Gewichtsverhältnis 90:10 bis 50:50 Verwendung.

Die Pfropfausbeute, d.h. der Quotient aus dem Gewicht der aufgepfropften Monomeren (bzw. dem Gewicht der Pfropfhülle) und dem Gewicht der eingesetzten Pfropfmonomeren beträgt in der Regel 20 bis 80 Gew.-%, vorzugsweise 40 bis 80 Gew.-%. Die Bestimmung der Pfropfausbeute erfolgt gemäß der Beschreibung von M. Hoffmann, H. Krömer und R. Kuhn in Polymeranalytik, Band 1, Georg-Thieme-Verlag, Stuttgart 1977.

Erfindungsgemäß verwendbare Pfropfkautschuke (B) auf Polyacrylatgrundlage werden beschrieben z.B. in der DE-B-24 44 584 (US-A-4 022 748) und der DE-A-27 26 256 (US-A-4 096 202).

Die erfindungsgemäß verwendbaren kautschukelastischen Pfropfpolymerisate (B) sind zweckmäßigerweise aufgebaut, bezogen auf das Gesamtgewicht von (B) aus

B1) 50 bis 90 Gew.-%, vorzugsweise 60 bis 80 Gew.-% der Pfropfgrundlage (B1) und

B2) 10 bis 50 Gew.-%, vorzugsweise 20 bis 40 Gew.-% der Pfropfauflage (B2).

Es versteht sich, daß als kautschukelastische Pfropfpolymerisate (B) auch Mischungen der oben beschriebenen Typen eingesetzt werden können.

C) Als Aufkomponente (C) enthalten die erfindungsgemäßen thermoplastischen Formmassen, wie bereits dargelegt wurde, 5 bis 75 Gew.-Teile, vorzugsweise 10 bis 60 Gew.-Teile und insbesondere 10 bis 40 Gew.-Teile, bezogen auf 100 Gew.-Teile der Formmasse, eines oder mehrerer, vorzugsweise eines Copolymerisats (C), hergestellt durch Copolymerisation von, bezogen auf das Gesamtgewicht von (C),

C1) 55 bis 90 Gew.-%, vorzugsweise 60 bis 90 Gew.-% und insbesondere 75 bis 90 Gew.-% α-Methylstyrol und

C2) 10 bis 45 Gew.-%, vorzugsweise 10 bis 40 Gew.-% und insbesondere 10 bis 25 Gew.-% Acrylnitril oder Methacrylnitril oder einer Mischung aus Acrylnitril und Methacrylnitril.

Das Gewichtsverhältnis von Acrylnitril zu Methacrylnitril kann hierbei in breiten Grenzen variiert werden. Sofern Mischungen der genannten Art Anwendung finden, liegen die Gewichtsverhältnisse von Acrylnitril zu Methacrylnitril zweckmäßigerweise in einem Bereich von 90:10 bis 10:90, vorzugsweise von 90:10 bis 50:50. Anstelle von α-Methylstyrol können zur Herstellung der Copolymerisate (C) auch Mischungen aus α-Methylstyrol und Styrol und/oder anderen substituierten Styrolen, wie z.B. p-Methylstyrol, Verwendung finden unter der Voraussetzung, daß die Mischung mehr als 50 Gew.-%, bezogen auf das Gesamtgewicht, α-Methylstyrol enthält.

Derartige Copolymerisate können z.B. nach den in der DE-B-10 01 001 und DE-B-10 03 436 beschriebenen Verfahren hergestellt oder als Handelsprodukte erworben werden. Der durch Lichtstreuung bestimmte Gewichtsmittelwert des Molekulargewichts der Copolymerisate (C) liegt vorzugsweise im Bereich von 50.000 bis 500.000, insbesondere von 70.000 bis 250.000.

Zur Herstellung der erfindungsgemäßen thermoplastischen Formmassen hat es sich unter dem Vorbehalt der Einhaltung der anspruchsgemäßen Gewichtsmengen als zweckmäßig erwiesen, die kautschukelastischen Pfropfcopolymerisate (B) und Copolymerisate (C) in solchen Mengen einzusetzen, daß das Gewichtsverhältnis von (B):(C) im Bereich von 1:3 bis 3:1, vorzugsweise 1:2 bis 2:1 und insbesondere von 1:1,5 bis 1,5:1 liegt.

D) Als erfindungswesentlichen Zusatz enthalten die neuen thermoplastischen Formmassen, wie bereits dargelegt wurde, 0,1 bis 5 Gew.-Teile, vorzugsweise 0,2 bis 4 Gew.-Teile und insbesondere 0,5 bis 3 Gew.-Teile, bezogen auf 100 Gew.-Teile der Formmasse, eines oder mehrerer, vorzugsweise eines Copolymerisats (D), das hergestellt wird durch Copolymerisation, bezogen auf das Gesamtgewicht von (D), von

D1) 60 bis 99 Gew.-%, vorzugsweise von 70 bis 95 Gew.-% und insbesondere von 75 bis 90 Gew.-% Styrol und

D2) 1 bis 40 Gew.-%, vorzugsweise von 5 bis 30 Gew.-% und insbesondere von 10 bis 25 Gew.-% eines oder mehrerer, vorzugsweise eines olefinisch ungesättigten Monomeren, das mindestens eine ausgewählte funktionelle Gruppe gebunden enthält.

Erfindungsgemäß kommen als ausgewählte funktionelle Gruppen in Betracht: die Carboxylgruppe, die tert.-Butylestergruppe, die unter den Reaktionsbedingungen der Formmassenherstellung unter Bildung einer Carboxylgruppe gespalten wird, die Hydroxylgruppe, Aminogruppe und vorzugsweise Carbonsäureanhydridgruppe.

Als Copolymere (D) eignen sich auch solche Copolymerisate; bei denen bis zu 90 Gew.-%, vorzugsweise bis zu 70 Gew.-% und insbesondere weniger als 50 Gew.-%, bezogen auf das Gewicht von (D2), der olefinisch ungesättigten Monomeren (D2) durch Acrylnitril ersetzt sind.

Als geeignete olefinisch ungesättigte Monomere (D2) seien beispielhaft genannt: olefinisch ungesättigte Dicarbonsäuren, wie z.B. Maleinsäure, Fumarsäure und Itaconsäure sowie die entsprechenden Dicarbonsäure-mono- und/oder -di-tert.-butylester, olefinisch ungesättigte Monocarbonsäuren, wie z.B. Acrylsäure und Methacrylsäure sowie die entsprechenden (Meth)acrylsäure-tert.-butylester, olefinisch ungesättigte Carbonsäureanhydride wie z.B. Maleinsäureanhydrid und (Meth)acrylate der Formeln

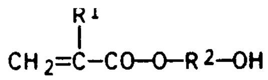 (I) und

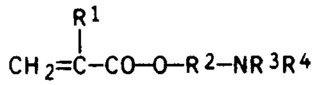 (II) ,

in denen bedeuten

$R^1$ ein Wasserstoffatom oder eine Methylgruppe,

$R^2$ einen verzweigtkettigen oder vorzugsweise linearen Alkylenrest mit 2 bis 16, vorzugsweise 2 bis 4 Kohlenstoffatomen,

$R^3$ und $R^4$ ein Wasserstoffatom oder eine lineare oder verzweigtkettige Alkylgruppe mit 1 bis 8, vorzugsweise 1 bis 2 Kohlenstoffatomen, wobei die Reste $R^3$ und $R^4$ gleich oder verschiedenartig sein können.

Als geeignete (Meth)acrylate der Formeln (I) und (II) seien beispielhaft genannt: Hydroxyethylmethacrylat, Hydroxypropylacrylat und N,N'-Dimethylaminoethylacrylat.

Als Copolymerisate (D) haben sich besonders bewährt und finden daher vorzugsweise Styrolcopolymere mit Maleinsäureanhydrideinheiten Verwendung.

E) Neben den erfindungswesentlichen Aufbaukomponenten (A) bis (D) können die erfindungsgemäßen Formmassen auch verstärkend wirkende Füllstoffe (E) und/oder Zusatzstoffe enthalten. Die Zusatzstoffe können hierbei, wie bereits ausgeführt wurde, über die TPU (A) eingebracht werden, mit einer oder mehrerer der Aufbaukomponenten (A) bis (D) abgemischt oder direkt der Reaktionsmasse bei der Herstellung der erfindungsgemäßen Formmassen einverleibt werden.

Der Anteil an verstärkend wirkenden Füllstoffen, die einzeln oder als Mischungen Verwendung finden können, beträgt, bezogen auf 100 Gew.-Teile der Formmassen, üblicherweise 0 bis 60 Gew.-Teile, vorzugsweise 2 bis 50 Gew.-Teile und insbesondere 5 bis 30 Gew.-Teile.

Als verstärkend wirkende Füllstoffe kommen beispielsweise in Betracht: organische Füllstoffe wie z.B. Ruß, chlorierte Polyethylene und Melamin und anorganische Füllstoffe, wie z.B. Wollastonit, Calciumcarbonat, Magnesiumcarbonat, amorphe Kieselsäure, Calciumsilikat, Calciummetasilikat, Quarzmehl, Talkum, Kaolin, Glimmer, Feldspat, Glaskugeln, Si- oder Bornitrid sowie Mischungen dieser Füllstoffe.

Als verstärkend wirkende Füllstoffe besonders bewährt haben sich und daher vorzugsweise Anwendung finden Fasern, beispielsweise Kohlenfasern oder insbesondere Glasfasern, besonders dann, wenn eine hohe Wärmeformbeständigkeit oder sehr hohe Steifigkeit gefordert wird, wobei die Fasern mit Haftvermittlern und/oder Schlichten ausgerüstet sein können. Geeignete Glasfasern, die z.B. auch in Form von Glasgeweben, -matten, -vliesen und/oder vorzugsweise Glasseidenrovings oder geschnittener Glasseide aus alkaliarmen E-Glasern mit einem Durchmesser von 5 bis 200 µm, vorzugsweise 6 bis 15 µm eingesetzt werden, weisen nach ihrer Einarbeitung in die Formmassen im allgemeinen eine mittlere Faserlänge von 0,05 bis 1 mm, vorzugsweise von 0, 1 bis 0,5 mm auf.

Wie bereits ausgeführt wurde, können den erfindungsgemäßen thermoplastischen Formmassen oder den hierfür geeigneten TPU (A) und/ anderen Aufbaukomponenten (B) bis (D) auch Zusatzstoffe einverleibt werden. Sofern derartige Einsatzstoffe Anwendung finden, beträgt ihr Anteil, bezogen auf 100 Gew.-Teile der Formmasse im allgemeinen bis zu 40 Gew.-Teile, vorzugsweise bis zu 10 Gew.-Teile und insbesondere 0,01 bis 5 Gew.-Teile. Als derartige Zusatzstoffe seien beispielsweise genannt: Flammschutzmittel, Keimbildungsmittel, Oxidationsverzögerer, Stabilisatoren, Gleit- und Entformungshilfsmittel und Farbstoffe.

Als Flammschutzmittel seien z.B. genannt: Melamin, Polyhalogendiphenyl, Polyhalogendiphenylether, Polyhalogenphthalsäure und ihre Derivate, Polyhalogenoligo- und -Polycarbonate, wobei die entsprechenden Bromverbindungen besonders wirksam sind. Als Flammschutzmittel eignen sich auch Phosphorverbindungen, wie elementarer Phosphor oder organische Phosphorverbindungen. Außerdem enthalten die Flammschutzmittel in der Regel zusätzlich einen Synergisten, z.B. Antimontrioxid.

Als Keimbildungsmittel können z.B. Talkum, Calciumfluorid, Natriumphenylphosphinat, Aluminiumoxid und feinteiliges Polytetrafluorethylen in Mengen bis zu 5 Gew.-%, bezogen auf 100 Gew.-Teile der Formmassen, eingesetzt werden.

Geeignete Oxidationsverzögerer und Wärmestabilisatoren, die den erfindungsgemäßen Formmassen zugesetzt werden können, sind beispielsweise Halogenide von Metallen der Gruppe I des periodischen Systems, z.B. Natrium-, Kalium-, Lithium-Halogenide, gegebenenfalls in Verbindung mit Kupfer-(I)-Halogeniden, z.B. Chloriden, Bromiden oder Iodiden, sterisch gehinderte Phenole, Hydrochinone, sowie substituierte Verbindungen dieser Gruppen und Mischungen davon, die vorzugsweise in Konzentrationen bis zu 1 Gew.-%, bezogen 100 Gew.-Teile der Formmassen, verwendet werden.

Beispiele für UV-Stabilisatoren sind verschiedene substituierte Resorcine, Salicylate, Benzotriazole und Benzophenone sowie sterisch gehinderte Amine, die im allgemeinen in Mengen bis zu 2,0 Gew.-%, bezogen auf 100 Gew.-Teile der Formmassen, eingesetzt werden.

Gleit- und Entformungsmittel, die in der Regel ebenfalls in Mengen bis zu 1 Gew.-%, bezogen auf 100 Gew.-Teile der Formmassen, zugesetzt werden, sind Stearinsäuren, Stearylalkohol, Stearinsäureester und -amide sowie die Fettsäureester des Pentaerythrits.

Ferner können organische Farbstoffe, wie Nigrosin, Pigmente, z.B. Titandioxid, Cadmiumsulfid, Cadmiumsulfidselenid, Phthalocyanine, Ultramarinblau oder Ruß zugesetzt werden.

Die erfindungsgemäßen thermoplastischen Formmassen können nach beliebigen bekannten Verfahren hergestellt werden, bei denen aus den Aufbaukomponenten (A) bis (D) und gegebenenfalls (E) im wesentlichen homogene Zusammensetzungen erhalten werden. Beispielsweise können die Aufbaukomponenten bei Temperaturen von 0 bis 150 °C, vorzugsweise 15 bis 30 °C gemischt und anschließend verschmolzen werden oder die Komponenten können direkt in der Schmelze vermischt werden. Nach einer anderen Verfahrensvariante können (A) mit (E) gemischt werden und diese Mischungen in die übrigen Aufbaukomponenten eingearbeitet werden.

Die Herstellung der erfindungsgemäßen thermoplastischen Formmassen erfolgt bei Temperaturen im Bereich von 190 bis 250 °C, vorzugsweise 210 bis 240 °C und einer Verweilzeit von 0,5 bis 10 Minuten, vorzugsweise von 0,5 bis 3 Minuten in beispielsweise fließfähigem, erweichten oder vorzugsweise geschmolzenem Zustand der Aufbaukomponenten (A) bis (D) z.B. durch Rühren, Walzen, Kneten oder vorzugsweise Extrudieren, beispielsweise unter Verwendung von üblichen Plastifizierungsvorrichtungen wie z.B. Brabender- oder Banbury-Mühlen, Knetern und Extrudern, vorzugsweise eines Doppelschnekken- oder Preßspritzmischextruders.

Nach dem zweckmäßigsten und daher vorzugsweise angewandten Herstellungsverfahren werden die Aufbaukomponenten (A) bis (D) gemischt, bei Temperaturen von 190 bis 250 °C, vorzugsweise in einem Extruder, zusammengeschmolzen, der Schmelze gegebenenfalls die Komponente (E) einverleibt und diese danach abkühlen gelassen und die erhaltenen Formmassen zerkleinert.

Die erfindungsgemäßen thermoplastischen Formmassen lassen sich leicht zu Formkörpern mit guter Oberflächenbeschaffenheit und verbesserter Schlagzähigkeit bei hoher Steifigkeit, insbesondere bei tiefen Temperaturen, verarbeiten, wobei weder in der Schmelze noch im Formkörper eine Entmischung in die Aufbaukomponenten eintritt.

Die erfindungsgemäßen Formmassen finden vorzugsweise Verwendung zur Herstellung von Formkörpern, insbesondere von großflächigen Spritzgupformteilen für Kraftfahrzeuge, vorzugsweise Automobilaußenteile wie z.B. Stoßfängern, Frontschürzen, Heckspoiler und Seitenstoßkanten. Sie eignen sich ferner für Formteile im Wageninnern, wie z.B. als Konsolenabdeckungen, Armlehnen und Griffen.

## Beispiele

Zur Herstellung der erfindungsgemäßen, thermoplastischen Formmassen wurden folgende thermoplastische Polyurethane (A) verwendet:

A1: TPU mit einer Härte nach Shore D von 74, das hergestellt wurde durch Umsetzung einer Mischung aus 0,5 Mol Butandiol-1,4-polyadipat mit einem Molekulargewicht von 2000 und 5,86 Mol Butandiol-1,4 mit 4,4'-Diphenylmethan-diisocyanat im Verhältnis von NCO-:OH-Gruppen von 1 bei Temperaturen im Bereich von 80 bis 170 °C nach dem Bandverfahren.

A2: TPU mit einer Härte nach Shore D von 74, das hergestellt wurde analog den Angaben von A1, jedoch unter Verwendung eines Verhältnisses von NCO-:OH-Gruppen von 1,04.

A3: TPU mit einer Härte nach Shore D von 64, das hergestellt wurde analog den Angaben von A1, jedoch unter Verwendung von 3,87 Mol Butandiol-1,4.

A4: TPU mit einer Härte nach Shore A von 90, das hergestellt wurde analog den Angaben von A1, jedoch unter Verwendung von 1,7 Mol Butandiol-1,4.

A5: TPU mit einer Härte nach Shore D von 74, hergestellt durch Umsetzung einer Mischung aus 0,5 Mol Butandiol-1,4-Ethylenglykol-polyadipat mit einem Butandiol-1,4:Ethylenglykol-Molverhältnis von 1:1 und einem Molekulargewicht von 2000 und 5,66 Mol Butandiol-1,4 mit 4,4'-Diphenylmethan-diisocyanat im Verhältnis von NCO-:OH-Gruppen von 1.

Die beschriebenen TPU A1 bis A5 enthielten, bezogen auf das Alkandiol-polyadipatgewicht, 1 Gew.-% Diisopropylphenylcarbodiimid als Hydrolysestabilisator.

A6: TPU mit einer Härte nach Shore D von 74, das hergestellt wurde durch Umsetzung einer Mischung aus 1 Mol Polyoxytetramethylenglykol mit einem Molekulargewicht von 1000 und 5,9 Mol Butandiol-1,4 mit 4,4'-Diphenylmethan-diisocyanat im Verhältnis von NCO-:OH-Gruppen von 1 bei Temperaturen im Bereich von 90 bis 170 °C nach dem Bandverfahren.

B) Als Pfropfpolymerisate fanden Verwendung:

B1: Kautschukelastisches Pfropfpolymerisat mit einer Pfropfgrundlage (75 Gew.-%) aus Poly-n-butylacrylat, das durch Zusatz von 0,5 Gew.-% Butandioldiacrylat vernetzt wurde, und einer Pfropfauflage (25 Gew.-%) aus einem Copolymeren aus Styrol und Acrylnitril im Gewichtsverhältnis 75:25, hergestellt durch Emulsionspolymerisation in an sich bekannter Weise. Der mittlere Teilchendurchmesser $d_{50}$, der definiert ist als der Durchmesser, ober- und unterhalb dessen die Durchmesser von jeweils 50 % der Teilchen liegen, betrug 450 nm.

B2: Kautschukelastisches Pfropfpolymerisat mit einer Pfropfgrundlage (75 Gew.-%) aus Polybutadien und einer Pfropfauflage (25 Gew.-%) eines Copolymeren aus Styrol und Acrylnitril im Gewichtsverhältnis 75:25, hergestellt durch Emulsionspolymerisation in an sich bekannter Weise. Der mittlere Teilchendurchmesser $d_{50}$ betrug 250 nm.

B3: Kautschukelastisches Pfropfpolymerisat, hergestellt analog B2 jedoch mit dem Unterschied, daß die Pfropfauflage aus einem Copolymeren aus $\alpha$-Methylstyrol und Acrylnitril im Gewichtsverhältnis 75:25 besteht.

B4: Kautschukelastisches Pfropfpolymerisat mit einer Pfropfgrundlage (70 Gew.-%) aus Polybutadien und einer zweistufig hergestellten Pfropfauflage (insgesamt 30 Gew.-%), wobei die 1. Pfropfauflage (10 Gew.-%) aus Polystyrol und die 2. Pfropfauflage (20 Gew.-%) aus einem Copolymeren aus Methylmethacrylat, n-Butylacrylat und Glycidylmethacrylat im Gewichtsverhältnis 89:10:1 bestehen. Das Pfropfpolymerisat, das durch Emulsionspolymerisation in an sich bekannter Weise hergestellt wurde, besaß einen mittleren Teilchendurchmesser $d_{50}$ von 240 nm.

C) Als $\alpha$-Methylstyrol-Acrylnitril-copolymerisate wurden eingesetzt:

C1: $\alpha$-Methylstyrol-Acrylnitrilcopolymerisat, hergestellt aus $\alpha$-Methylstyrol und Acrylnitril im Gewichtsverhältnis 65:35, mit einer Viskositätszahl von 80, gemessen 0,5 gew.-%ig in Dimethylformamid bei 25 °C mit einem Kapillarviskosimeter.

C2: $\alpha$-Methylstyrol-Acrylnitrilcopolymerisat, hergestellt analog C1, jedoch mit einer Viskositätszahl von 60, gemessen wie bei C1.

C3: $\alpha$-Methylstyrol-Acrylnitrilcopolymerisat, hergestellt aus $\alpha$-Methylstyrol und Acrylnitril im Gewichtsverhältnis von 70:30, mit einer Viskositätszahl von 58, gemessen wie bei C1.

D) Als Copolymerisate aus Styrol und einem olefinisch ungesättigten Monomeren mit mindestens einer funktionellen Gruppe fanden Verwendung:

D1: Ein Styrol-Maleinsäureanhydrid-Copolymerisat mit einem Gehalt an Maleinsäureanhydrideinheiten von 24 Gew.-%, bezogen auf das Gesamtgewicht, und einer Viskositätszahl von 78, gemessen wie bei C1.

D2: Ein Styrol-Acrylnitril-Maleinsäureanhydrid-Copolymerisat, bestehend aus 70 Gew.-% Styrol-, 26 Gew.-% Acrylnitril- und 4 Gew.-% Maleinsäureanhydrideinheiten, bezogen auf das Gesamtgewicht, mit einer Viskositätszahl von 83, gemessen wie bei C1.

E: Als verstärkend wirkender Füllstoff wurden E-Glasfasern in Form von Rovings oder Schnittfasern mit einem Durchmesser von 10 $\mu$m verwendet.

Beispiele 1 bis 16 und Vergleichsbeispiele I bis IV

Zur Herstellung der Formmassen wurden die Aufbaukomponenten (A) bis (D) und gegebenenfalls Schnittfasern (E) bei einer Temperatur von 23 °C intensiv gemischt, die Mischung in einen Zweischneckenextruder eingebracht, bei 230 °C aufgeschmolzen, innerhalb eines Zeitraumes von 2 Minuten bei derselben Temperatur homogenisiert und danach in ein Wasserbad extrudiert.

Bei Verwendung von Rovings werden diese direkt der homogenisierten Schmelze zugesetzt.

Nach der Granulierung und Trocknung wurde die Formmasse mit Hilfe einer Spritzgußmaschine bei 230 °C zu Prüfkörpern verformt, an denen, ohne weitere Nachbehandlung, die Kerbschlagzähigkeit nach DIN 53 453 und der Elastizitätsmodul nach DIN 53 457 gemessen wurde.

Die Art und Menge der verwendeten Aufbaukomponenten und die an den Prüfkörpern gemessenen mechanischen Eigenschaften sind in den Tabellen 1 und 2 zusammengefaßt.

Tabelle 1

| Beispiele | Aufbaukomponenten | | | | | | | | mechanische Eigenschaften | | |
|---|---|---|---|---|---|---|---|---|---|---|---|
| | TPU (A) | | Pfropf-polymerisat B | | α-Methylstyrol-copolymerisat C | | Styrol-copolymerisat D | | Elastizitäts-modul | Kerbschlagzähigkeit -20°C | Kerbschlagzähigkeit -30°C |
| | Menge [Gew.-Teile] | Art | Menge [Gew.-Teile] | Art | Menge [Gew.-Teile] | Art | Menge [Gew.-Teile] | Art | [N/mm²] | [KJ/m²] | [KJ/m²] |
| 1 | 60 | A1 | 20 | B2 | 19 | C3 | 1 | D1 | 590 | 60 | 15 |
| 2 | 60 | A2 | 20 | B2 | 19 | C3 | 1 | D1 | 580 | o.Br.* | 18 |
| 3 | 60 | A3 | 20 | B2 | 19 | C3 | 1 | D1 | 710 | 44 | 11 |
| 4 | 60 | A4 | 20 | B1 | 19 | C3 | 1 | D1 | 380 | o.Br. | 36 |
| 5 | 60 | A5 | 20 | B3 | 19 | C3 | 1 | D1 | 620 | 45 | 12 |
| 6 | 60 | A6 | 20 | B4 | 19 | C3 | 1 | D1 | 550 | o.Br. | 22 |
| 7 | 75 | A1 | 10 | B1 | 14 | C1 | 1 | D1 | 405 | o.Br. | 26 |
| 8 | 75 | A1 | 10 | B2 | 14 | C3 | 1 | D1 | 400 | o.Br. | 23 |
| 9 | 85 | A1 | 7 | B3 | 7 | C3 | 1 | D1 | 370 | o.Br. | 41 |
| 10 | 60 | A1 | 20 | B4 | 19 | C3 | 1 | D2 | 600 | 55 | 14 |
| 11 | 60 | A1 | 20 | B1 | 19 | C3 | 1 | D2 | 610 | 53 | 12 |
| 12 | 60 | A1 | 20 | B2 | 19,5 | C2 | 0,5 | D1 | 560 | 49 | 12 |
| 13 | 60 | A1 | 20 | B2 | 18 | C2 | 2 | D1 | 600 | 62 | 16 |
| Vergleichs-beispiele | | | | | | | | | | | |
| I | 60 | A1 | 20 | B2 | 20 | C3 | - | - | 550 | 54 | 9 |
| II | 60 | A3 | 20 | B2 | 20 | C3 | - | - | 600 | 23 | 6 |
| III | 60 | A6 | 20 | B4 | 20 | C3 | - | - | 500 | 55 | 16 |

* ohne Bruch

Tabelle 2

| Beisp. | Aufbaukomponenten | | | | | | | | | mechanische Eigenschaften | | |
|---|---|---|---|---|---|---|---|---|---|---|---|---|
| | TPU (A) | | Pfropfpolymerisat B | | α-Methylstyrol-copolymerisat C | | Styrol-copolym. D | | Verstärkungsmittel E | Elastizitätsmodul | Kerbschlagzähigkeit | |
| | Menge [Gew.-Teile] | Art | Menge [Gew.-Teile] | Art | Menge [Gew.-Teile] | Art | Menge [Gew.-Teile] | Art | [Gew.-Teile] | [N/mm2] | -20°C [KJ/m2] | -30°C [KJ/m2] |
| 14 | 48 | A1 | 16 | B2 | 15 | C3 | 1 | D1 | 20 | 3700 | 32 | 11 |
| 15 | 48 | A4 | 16 | B2 | 15 | C3 | 1 | D1 | 20 | 3200 | 41 | 14 |
| 16 | 48 | A6 | 16 | B2 | 15 | C3 | 1 | D2 | 20 | 3400 | 36 | 15 |
| Vergl.-beisp. IV | 48 | A1 | 16 | B2 | 16 | C3 | - | - | 20 | 3600 | 28 | 8 |

## Patentansprüche

1. Thermoplastische Formmassen auf der Grundlage einer TPU-Copolymerisatmischung, die, bezogen auf 100 Gew.-Teile, enthalten

A) 20 bis 90 Gew.-Teile mindestens eines thermoplastischen Polyurethans,

B) 1 bis 40 Gew.-Teile mindestens eines kautschukelastischen Pfropfcopolymerisats, das aufgebaut ist aus

B1) einer Pfropfgrundlage, bestehend aus einem kautschukelastischen Polymeren mit einer Glasübergangstemperatur von unter -20 °C auf Basis Butadien oder Acrylaten mit 1 bis 10 Kohlenstoffatomen im Alkoholrest und gegebenenfalls einem Vernetzer und

B2) einer Pfropfauflage, hergestellt durch ein- oder mehrstufige Copolymerisation von Styrol, α-Methylstyrol, Acrylnitril, Methacrylnitril und Methylmethacrylat oder von Mischungen aus mindestens zwei der genannten Monomeren,

C) 5 bis 75 Gew.-Teile mindestens eines Copolymerisats, hergestellt durch Copolymerisation, bezogen auf das Gesamtgewicht von (C), von

C1) 55 bis 90 Gew.-% α-Methylstyrol und

C2) 10 bis 45 Gew.-% Acrylnitril oder Methacrylnitril oder Mischungen davon,

D) 0,1 bis 5 Gew.-Teile mindestens eines Copolymerisats, hergestellt durch Copolymerisation, bezogen auf das Gesamtgewicht von (D), von

D1) 60 bis 99 Gew.-% Styrol und

D2) 1 bis 40 Gew.-% mindestens eines olefinisch ungesättigten Monomeren mit mindestens einer Carboxyl-, Anhydrid-, tert.-Butylester-, Hydroxyl- oder Aminogruppe

und

E) 0 bis 60 Gew.-Teile mindestens eines verstärkend wirkenden Füllstoffs.

**2.** Thermoplastische Formmassen auf der Grundlage einer TPU-Copolymerisatmischung, die, bezogen auf 100 Gew.-Teile, bestehen aus

A) 20 bis 90 Gew.-Teilen mindestens eines thermoplastischen Polyurethans,

B) 1 bis 40 Gew.-Teilen eines kautschukelastischen Pfropfcopolymerisats, aufgebaut aus

B1) einer Pfropfgrundlage, bestehend aus einem kautschukelastischen Polymeren mit einer Glasübergangstemperatur von unter -20 °C auf Basis Butadien oder Acrylaten mit 1 bis 10 Kohlenstoffatomen im Alkoholrest und gegebenenfalls einem Vernetzer und

B2) einer Pfropfauflage, hergestellt durch ein- oder mehrstufige Copolymerisation von Styrol, α-Methylstyrol, Acrylnitril, Methacrylnitril und Methylmethacrylat oder von Mischungen aus mindestens zwei der genannten Monomeren,

C) 5 bis 75 Gew.-Teilen eines Copolymerisats, hergestellt durch Copolymerisation, bezogen auf das Gesamtgewicht von (C), von

C1) 55 bis 90 Gew.-% α-Methylstyrol und

C2) 10 bis 45 Gew.-% Acrylnitril oder Methacrylnitril oder Mischungen davon,

D) 0,1 bis 5 Gew.-Teilen eines Copolymerisats, hergestellt durch Copolymerisation, bezogen auf das Gesamtgewicht von (D), von

D1) 60 bis 99 Gew.-% Styrol und

D2) 1 bis 40 Gew.-% mindestens eines olefinisch ungesättigten Monomeren mit mindestens einer Carboxyl-, Anhydrid-, tert.-Butylester-, Hydroxyl- oder Aminogruppe

und

E) 0 bis 60 Gew.-Teilen mindestens eines verstärkend wirkenden Füllstoffs.

**3.** Thermoplastische Formmassen nach Anspruch 1 oder 2, dadurch gekennzeichnet, daß das kautschukelastische Pfropfpolymerisat (B), bezogen auf das Gesamtgewicht von (B), aufgebaut ist aus

B1) 50 bis 90 Gew.-% der Pfropfgrundlage (B1) und

B2) 10 bis 50 Gew.-% der Pfropfauflage (B2).

**4.** Thermoplastische Formmassen nach einem der Ansprüche 1 bis 3, dadurch gekennzeichnet, daß bis zu 90 Gew.-% der olefinisch ungesättigten Monomeren (D2) durch Acrylnitril substituiert sind.

**5.** Thermoplastische Formmassen nach einem der Ansprüche 1 bis 4, dadurch gekennzeichnet, daß die olefinisch ungesättigten Monomeren (D2) ausgewählt sind aus der Gruppe Maleinsäure, Fumarsäure, Acrylsäure, Methacrylsäure, Itaconsäure oder den entsprechenden tert.-Butylestern, Maleinsäureanhydrid oder (Meth)acrylaten der Formeln

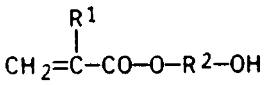 (I) und

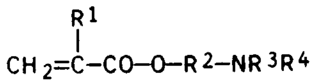 (II) ,

in denen bedeuten

| | |
|---|---|
| $R^1$ | ein Wasserstoffatom oder eine Methylgruppe, |
| $R^2$ | einen linearen oder verzweigten Alkylenrest mit 2 bis 16 Kohlenstoffatomen, |
| $R^3$ und $R^4$ | ein Wasserstoffatom oder eine Alkylgruppe mit 1 bis 8 Kohlenstoffatomen, wobei die Reste $R^3$ und $R^4$ gleich oder verschiedenartig sein können. |

**6.** Thermoplastische Formmassen nach einem der Ansprüche 1 bis 4, dadurch gekennzeichnet, daß das olefinisch ungesättigte Monomere (D2) aus Maleinsäureanhydrid besteht.

**7.** Thermoplastische Formmassen nach einem der Ansprüche 1 bis 6, dadurch gekennzeichnet, daß die thermoplastischen Polyurethan-Elastomeren (A) hergestellt werden durch Umsetzung von
a) organischen Diisocyanaten mit
b) Polyhydroxylverbindungen mit Molekulargewichten von 500 bis 8000 und
c) Diolen mit Molekulargewichten von 60 bis 400
in einem Äquivalenzverhältnis von NCO-Gruppen der organischen Diisocyanate (a) zur Summe der Hydroxylgruppen der Komponenten (b) und (c) von 0,8:1,0 bis 1,2:1,0.

**8.** Thermoplastische Formmassen nach einem der Ansprüche 1 bis 7, dadurch gekennzeichnet, daß die thermoplastischen Polyurethan-Elastomeren (A) hergestellt werden nach dem Bandverfahren durch Umsetzung von
a) aromatischen Diisocyanaten, vorzugsweise 4,4'-Diphenylmethan-diisocyanat, mit
b) im wesentlichen linearen Polyhydroxylverbindungen, vorzugsweise Polyalkylenglykol-polyadipaten mit 2 bis 6 C-Atomen im Alkylenrest und Molekulargewichten von 500 bis 6000 oder hydroxylgruppenhaltigem Polytetrahydrofuran mit einem Molekulargewicht von 500 bis 3500, und
c) Butandiol-1,4.

**9.** Verfahren zur Herstellung von thermoplastischen Formmassen nach einem der Ansprüche 1 bis 8 durch Zusammenschmelzen der Komponenten (A) bis (D) sowie gegebenenfalls (E) in einer üblichen Mischvorrichtung, vorzugsweise einem Extruder, bei einer Temperatur im Bereich von 190 bis 250 °C und einer Verweilzeit von 0,5 bis 10 Minuten.

**10.** Verwendung der thermoplastischen Formmassen auf der Grundlage von TPU-Copolymerisatmischungen nach einem der Ansprüche 1 bis 8 zur Herstellung von Spritzgußformteilen.

**Claims**

**1.** A thermoplastic molding material based on a TPU copolymer mixture and containing, based on 100 parts by weight,
A) from 20 to 90 parts by weight of at least one thermoplastic polyurethane,
B) from 1 to 40 parts by weight of at least one elastomeric graft copolymer formed from
B1) a grafting base comprising an elastomeric polymer having a glass transition temperature of below -20 °C based on butadiene or an acrylate having from 1 to 10 carbon atoms in the alcohol moiety with or without a crosslinker and
B2) a graft superstratum prepared by single- or multi-stage copolymerization of styrene, α-methylstyrene, acrylonitrile, methacrylonitrile and methyl methacrylate or of a mixture of at least two of said monomers,
C) from 5 to 75 parts by weight of at least one copolymer prepared by copolymerization of, based on the total weight of (C),
C1) from 55 to 90 % by weight of α-methylstyrene and

C2) from 10 to 45 % by weight of acrylonitrile or methacrylonitrile or a mixture thereof,

D) from 0.1 to 5 parts by weight of at least one copolymer prepared by copolymerization of, based on the total weight of (D),

D1) from 60 to 99 % by weight of styrene and

D2) from 1 to 40 % by weight of at least one olefinically unsaturated monomer having at least one carboxyl, anhydride, tert-butyl ester, hydroxyl or amino group, and

E) from 0 to 60 parts by weight of at least one reinforcing filler.

**2.** A thermoplastic molding material based on a TPU copolymer mixture consisting of, based on 100 parts by weight,

A) from 20 to 90 parts by weight of at least one thermoplastic polyurethane,

B) from 1 to 40 parts by weight of an elastomeric graft copolymer formed from

B1) a grafting base comprising an elastomeric polymer having a glass transition temperature of below -20 °C based on butadiene or an acrylate having from 1 to 10 carbon atoms in the alcohol moiety with or without a crosslinker and

B2) a graft superstratum prepared by single- or multi-stage copolymerization of styrene, α-methylstyrene, acrylonitrile, methacrylonitrile and methyl methacrylate or of a mixture of at least two of said monomers,

C) from 5 to 75 parts by weight of a copolymer prepared by copolymerization of, based on the total weight of (C),

C1) from 55 to 90 % by weight of α-methylstyrene and

C2) from 10 to 45 % by weight of acrylonitrile or methacrylonitrile or a mixture thereof,

D) from 0.1 to 5 parts by weight of a copolymer prepared by copolymerization of, based on the total weight of (D),

D1) from 60 to 99 % by weight of styrene and

D2) from 1 to 40 % by weight of at least one olefinically unsaturated monomer having at least one carboxyl, anhydride, tert-butyl ester, hydroxyl or amino group, and

E) from 0 to 60 parts by weight of at least one reinforcing filler.

**3.** A thermoplastic molding material as claimed in claim 1 or 2, wherein the elastomeric graft polymer (B) is formed from, based on the total weight of (B),

B1) from 50 to 90 % by weight of the grafting base (B1) and

B2) from 10 to 50 % by weight of the graft super-stratum (B2).

**4.** A thermoplastic molding material as claimed in claim 1 or 2 or 3, wherein up to 90 % by weight of the olefinically unsaturated monomer (D2) has been replaced by acrylonitrile.

**5.** A thermoplastic molding material as claimed in claim 1 or 2 or 3 or 4, wherein the olefinically unsaturated monomer (D2) is selected from the group consisting of maleic acid, fumaric acid, acrylic acid, methacrylic acid, itaconic acid, the corresponding tert-butyl esters, maleic anhydride and (meth)-acrylates of the formulae

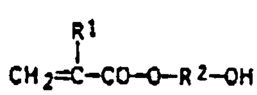

(I) and

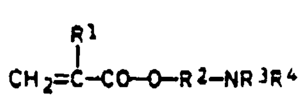

(II),

where

| | |
|---|---|
| $R^1$ | is hydrogen or methyl, |
| $R^2$ | is linear or branched alkylene of from 2 to 16 carbon atoms, and |
| $R^3$ and $R^4$, | which may be identical to or different from each other, are each hydrogen or alkyl of |

from 1 to 8 carbon atoms.

**6.** A thermoplastic molding material as claimed in claim 1 or 2 or 3 or 4, wherein the olefinically unsaturated monomer (D2) is maleic anhydride.

**7.** A thermoplastic molding material as claimed in claim 1 or 2 or 3 or 4 or 5 or 6, wherein the thermoplastic polyurethane elastomer (A) is prepared by reacting
a) an organic diisocyanate with
b) a polyhydroxy compound having a molecular weight of from 500 to 8000 and
c) a diol having a molecular weight of from 60 to 400
in an equivalence ratio of NCO groups of organic diisocyanate (a) to the sum total of hydroxyl groups of components (b) and (c) of from 0.8:1.0 to 1.2:1.0.

**8.** A thermoplastic molding material as claimed in claim 1 or 2 or 3 or 4 or 5 or 6 or 7, wherein the thermoplastic polyurethane elastomer (A) is prepared by the belt technique by reacting
a) an aromatic diisocyanate, preferably 4,4'-diphenylmethane diisocyanate, with
b) an essentially linear polyhydroxy compound, preferably a polyalkylene glycol polyadipate having from 2 to 6 carbon atoms in the alkylene moiety and a molecular weight of from 500 to 6000 or a hydroxyl-containing polytetrahydrofuran having a molecular weight of from 500 to 3500, and
c) 1,4-butanediol.

**9.** A process for preparing a thermoplastic molding material as claimed in claim 1 or 2 or 3 or 4 or 5 or 6 or 7 or 8 by melting together components (A) to (D) with or without (E) in a customary mixing apparatus, preferably an extruder, at 190-250 °C in the course of a residence time of from 0.5 to 10 minutes.

**10.** The use of a thermoplastic molding material based on a TPU copolymer mixture as claimed in claim 1 or 2 or 3 or 4 or 5 or 6 or 7 or 8 for producing injection moldings.

## Revendications

**1.** Matières à mouler thermoplastiques à base d'un mélange de copolymère de TPU qui contiennent rapportés à 100 parties en poids
A) 20 à 90 parties en poids d'au moins un polyuréthanne thermoplastique
B) 1 à 40 parties en poids d'au moins un copolymérisat en greffe à élasticité du caoutchouc, qui est formé à partir de
B1) une base greffée, constituée d'un polymère à élasticité de caoutchouc, d'une température de transition vitreuse de moins de -20 °C à base de butadiène ou d'acrylates ayant 1 à 10 atomes de carbone dans un reste alcoolique et éventuellement d'un agent de réticulation et
B2) une couche de dessous greffée, obtenue par copolymérisation en une ou plusieurs phases de styrène, $\alpha$-méthylstyrène, acrylonitrile, méthacrylonitrile et méthacrylate de méthyle ou de mélanges d'au moins deux desdits monomères
C) 5 à 75 parties en poids d'au moins un copolymérisat obtenue par copolymérisation de, rapportés au poids total de C)
C1) 55 à 90 % en poids d'$\alpha$-méthylstyrène et
C2) 10 à 45 % en poids d'acrylonitrile ou méthacrylonitrile ou de mélanges de ceux-ci
D) 0,1 à 5 parties en poids d'au moins un copolymérisat obtenu par copolymérisation de, rapportés au poids total de D)
D1) 60 à 99% en poids de styrène et
D2) 1 à 40 % en poids d'au moins un monomère insaturé oléfiniquement avec au moins un groupe carboxyle, anhydride, tert-butylester, hydroxyle ou amino, et
E) 0 à 60 parties en poids d'au moins une charge à activité de renforcement.

**2.** Matières à mouler thermoplastiques à base d'un mélange de copolymère de TPU qui sont constituées, rapportés à 100 parties en poids, de
A) 20 à 90 parties en poids d'au moins un polyuréthanne thermoplastique
B) 1 à 40 parties en poids d'un copolymérisat en greffe à élasticité du caoutchouc, formé à partir de

B1) une base greffée, constituée d'un polymère à élasticité de caoutchouc, d'une température de transition vitreuse de moins de -20 °C à base de butadiène ou d'acrylates ayant 1 à 10 atomes de carbone dans un reste alcoolique et éventuellement d'un agent de réticulation et

B2) une couche de dessous greffée, obtenue par copolymérisation en une ou plusieurs phases de styrène, α-méthylstyrène, acrylonitrile, méthacrylonitrile et méthacrylate de méthyle ou de mélanges d'au moins deux desdits monomères

C) 5 à 75 parties en poids d'au moins un copolymérisat obtenue par copolymérisation de, rapportés au poids total de C)

C1) 55 à 90 % en poids d'α-méthylstyrène et

C2) 10 à 45 % en poids d'acrylonitrile ou méthacrylonitrile ou de mélanges de ceux-ci

D) 0,1 à 5 parties en poids d'au moins un copolymérisat obtenu par copolymérisation de, rapportés au poids total de D)

D1) 60 à 99% en poids de styrène et

D2) 1 à 40 % en poids d'au moins un monomère insaturé oléfiniquement avec au moins un groupe carboxyle, anhydride, tert-butylester, hydroxyle ou amino, et

E) 0 à 60 parties en poids d'au moins une charge à activité de renforcement.

**3.** Matières à mouler thermoplastiques selon la revendication 1 ou 2, caractérisées par le fait que le polymérisat greffé à élasticité de caoutchouc (B) est formé à partir de, rapportés au poids total de B) ;

B1) 50 à 90 % en poids de la base greffée (B1) et

B2) 10 à 50 % en poids de la couche de dessous greffée (B2).

**4.** Matières à mouler thermoplastiques selon la revendication 1 à 3, caractérisées par le fait que jusqu'à 90 % un poids de monomères insaturés oléfiniquement (D2) sont saturés par de l'acrylonitrile.

**5.** Matières à mouler thermoplastiques selon l'une des revendications 1 à 4, caractérisées par le fait que les monomères insaturés éthyléniquement (D2) sont choisis dans le groupe des acides maléique, fumarique, acrylique, méthacrylique, itaconique ou des tert-butylesters, anhydrides maléiques ou méthacrylates correspondants des formules

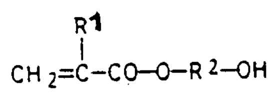 (I) et

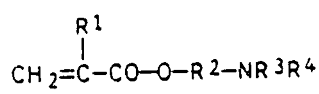 (II)

dans lesquelles

$R^1$ représente un atome d'hydrogène ou un groupe méthyle

$R^2$, un reste alkyle linéaire ou ramifié de 2 à 16 atomes de carbone

$R^3$ et $R^4$ un atome d'hydrogène ou un groupe alkyle de 1 à 8 atomes de carbone, les restes $R^3$ et $R^4$ pouvant être identiques ou différents.

**6.** Matières à mouler thermoplastiques selon l'une des revendications 1 à 4, caractérisées par le fait que le monomère insaturé éthyléniquement (D2) est l'anhydride maléique.

**7.** Matières à mouler thermoplastiques selon l'une des revendications 1 à 6, caractérisées par le fait que les élastomères de polyuréthanne thermoplastiques (A) sont obtenus par réaction de

a) diisocyanates organiques avec

b) des composés polyhydroxyles à poids moléculaires de 500 à 8000 et

c) de diolène à poids moléculaire de 60 à 400

dans un rapport d'équivalence des groupes NCO des diisocyanates organiques (a) à la somme des groupes hydroxyle des composants (b) et (c) de 0,8/1,0 à 1,2/1,0.

**8.** Matières à mouler thermoplastique selon l'une des revendications 1 à 7, caractérisées par le fait que les élastomères de polyuréthanne thermoplastiques (A) sont obtenus selon le procédé en continu par

réaction de

a) diisocyanates aromatiques, de préférence 4,4-diphénylméthane-diisocyanate,avec

b) des composés polyhydroxyle en principe linéaires de préférence des polyalkylèneglycol-polyadipates avec 2 à 6 atomes C dans le reste alkylène et de poids moléculaire de 500 à 6000 ou de polytétrahydrofuranne à groupes hydroxyle d'un poids moléculaire de 500 à 3500 et

c) du butanediol-1,4.

**9.** Procédé de préparation de matières à mouler thermoplastiques selon l'une des revendications 1 à 8 par fusion d'ensemble des composants (A) à (D) ainsi qu'éventuellement (E) dans appareil mélangeur usuel, de préférence une boudineuse, à une température dans la zone de 190 à 250 °C et un temps de séjour de 0,5 à 10 minutes.

**10.** Utilisation des matières à mouler thermoplastiques à base de mélanges de copolymérisation de TPU selon l'une des revendications 1 à 8 pour la fabrication de pièces moulées par injection.